# EUROPEAN PATENT APPLICATION

(11) **EP 1 134 571 A2**
(43) Date of publication of application: **19.09.2001**
(21) Application number: 01200968.4
(22) Date of filing: 15.03.2001
(51) Int. Cl.: G01M 3/24

(54) **Leak-noise data logger**

(30) Priority: 16.03.2000 GB 0006320
(71) Applicant: Primayer Limited, Denmead, Hampshire PO7 6AR (GB)
(72) Inventor: Ironmonger, Roger Charles, Emsworth, Hampshire PO10 8SX (GB)
(74) Representative: Brooks, Nigel Samuel

(57) **Abstract**

A leak-noise data logger comprising an acoustic transducer, means for sampling the output of the acoustic transducer; means for measuring the most persistent sampled noise in a monitoring period and means for outputting a ranked indication of the most persistent sampled noise. The leak-noise data logger may also include means for measuring the quietest sampled noise in the monitoring period and means for outputting a ranked indication of the quietest sampled noise. The basis for ranking the quietest and the most persistent noise indications can be on the basis of the measured values. The basis for ranking the most persistent noise indications can also be on the basis of the "lower sample concentration" of noise samples, by which is meant the dB extent of the samples from the quietest noise to the most persistent noise; the steepness of the distribution curve and the skewing of the distribution of noise samples.

## Description

The present invention relates to a leak-noise data logger.

It is well known that many water mains are leaky. Water flowing in mains produces a noise and leaks in particular are noisy. Thus, leaks can be detected by listening to the mains. This is best done at night, when noise from sources other than leaks is at a minimum. Night time is an expensive time for manual listening, and loggers for logging leak-noise and its parameters are known.

A comparatively unsophisticated leak-noise data logger is described in British Patent Application No 2,335,041. It provides an alarm indicative of the presence of a leak, if a measured parameter exceeds a maximum or falls below a minimum.

The object of the present invention is to provide an improved leak-noise data logger.

According to the invention there is provided a leak-noise data logger comprising:
- an acoustic transducer;
- means for sampling the output of the acoustic transducer;
- means for measuring the most persistent sampled noise in a monitoring period; and
- means for outputting a ranked indication of the most persistent sampled noise.

Additionally the data logger preferably includes:
- means for measuring the quietest sampled noise in the monitoring period and
- means for outputting a ranked indication of the quietest sampled noise.

Whilst it is envisaged that the basis for ranking the quietest and the most persist noise indications can be similar, namely on the basis of measured values; the ranking of the most persistent noise preferably takes account of one or more other statistical considerations.

The preferred other statistical consideration is the "lower sample concentration" of the noise samples, by which is meant the dB extent of the samples, from the quietest noise to the most persistent noise, and/or the steepness of the distribution curve. A further statistical consideration is the skewing of the distribution of noise samples.

Preferably, the ranking of the quietest noise is into discrete noise level bands. In the preferred embodiment, the noise level bands are of the order of 10 dB wide.

Preferably, the ranking of the most persistent noise is based on its recurrence. In the preferred embodiment, a leak indication is given only if the lower sample concentration of noise from the quietest to the most persistent is less than a certain dB level, preferably 3dB, and only if the quietest noise has a greater than a predetermined noise level, preferably 20dB. The leak indications are ranked as in terms of leak presence confidence, for example:
High Confidence
Confidence
Probable
Improbable.

The output means is preferably a number of LEDs, arranged to indicate the rankings. To save power, the LEDs arranged to be illuminated only when the data logger is interrogated. Other outputs means can be envisaged, such as radio or acoustic data transmission.

To help understanding of the invention, a specific embodiment thereof will now be described by way of example and with reference to the accompanying drawings, in which:
Figure 1 is a side view of a data logger of the invention installed on a water main;
Figure 2 is a plan view on a larger scale of the logger of Figure 1;
Figure 3 is a block diagram of the circuitry of the logger of Figure 1;
Figure 4 is a histogram of logged noise levels in terms of dB on the X-axis and % of samples having the noise level on the Y-axis.

The data logger 1 is mounted in use on a valve 2 or the like in a water main 3. The mounting point need only be in good acoustic contact with the water flowing in the main. The main is likely to be suspected of having a leak at some point along its length, typically in the form of a rust hole in a steel pipe or a burst in a plastic pipe. The logger has an acoustic transducer 4 with an active element 5 in contact with metal of the stop cock to detect noise of water flow in the main. The logger can be kept in place by any suitable means such as a magnet incorporated in the active face which can hold the data logger onto the stem 6 of the valve 2.

Within the logger body, which is hollow, is mounted a power supply 1 land a microprocessor 12 with associated memory 13. A lid of the body has a display 14 and an interrogation photodiode 15. The display comprises two sets 16,17 of LEDs, one set being for indicating the noise level of the quietest noise logged and the other set being for indicating a level of confidence that the logger is logging leak noise or at least characteristics of a leak noise. The logger is so configured that when a coded optical signal - conveniently a strobe light - is shone at the photodiode 15, the LEDs 16,17 are illuminated. The logger is also provided with a capacitive link output 18 for down loading data to a computer - not shown. When the photodiode is irradiated with a strobe of one frequency, the LEDs are illuminated to display quietest noise and leak level confidence data for readings taken during the previous night. When a different strobe frequency is used, data recording during the nights of many previous weeks are down loaded. This data can be that of just the processed noise samples, i.e. the quietest and confidence data, or it can be the raw sample data or a combination of both. Where the raw data is down loaded, the ranking of the samples can be carried out in a base station computer in the manner about to be described.

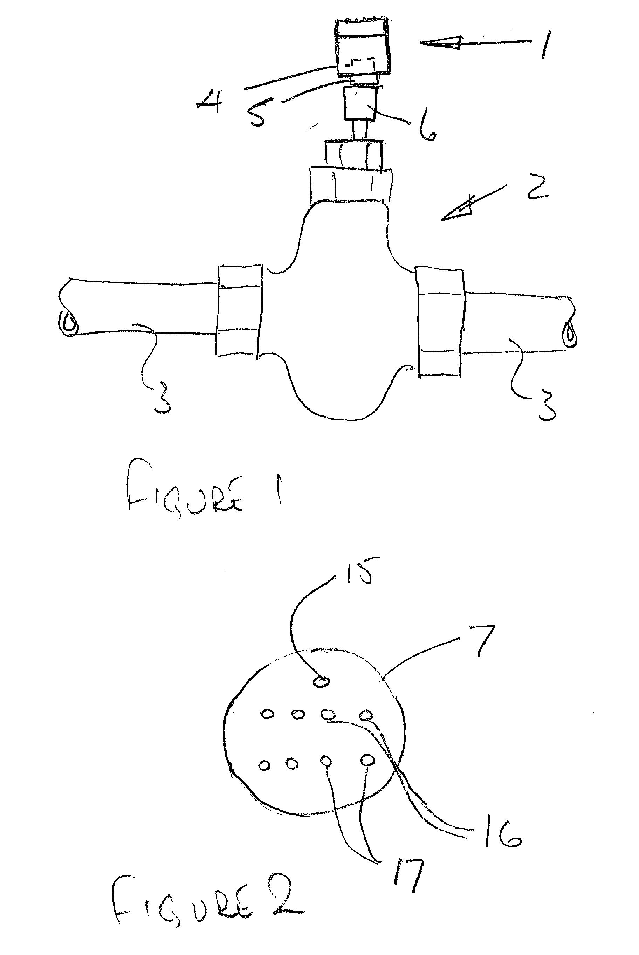

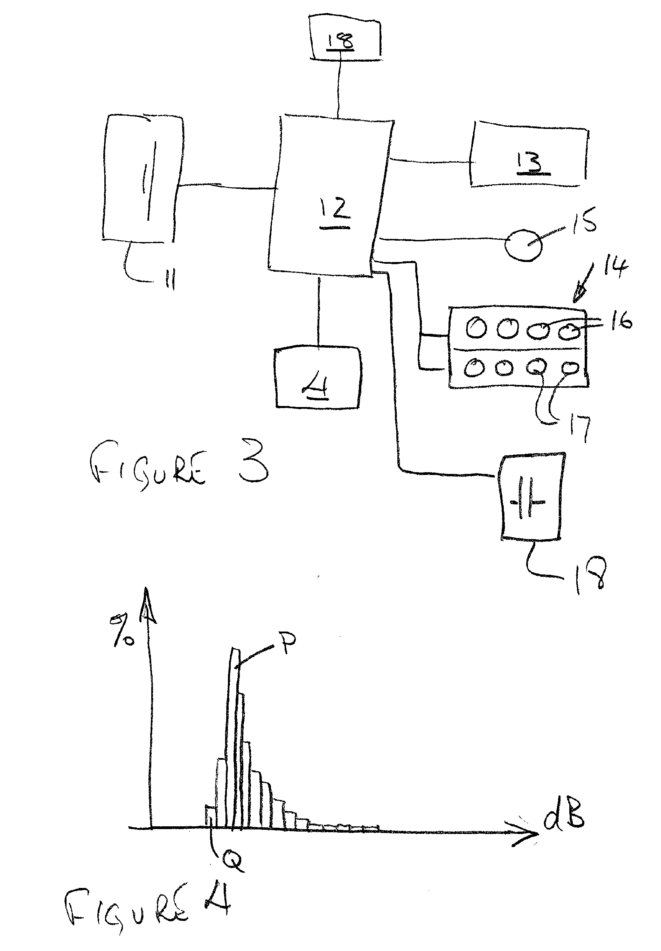

Referring to Figures 3 & 4, the microprocessor, under control of its clock 19, causes the transducer to sample the noise of the water every second for two hours, preferably during a low usage time of night. The dB levels of the noise are logged in the memory and statistically analysed by the microprocessor for the following parameters:
i. **the noise level in dB of the quietest noise in the sampling period,** that is the noise level of the lowest noise level column Q in the histogram of Figure 4. The quietest noise is likely to be that of a leak if present, bearing in mind that the noise of a leak is not constant and has slightly varying characteristics. The bigger the leak, the louder will be the noise of the quietest sampled noise, that is the further to the right on the X-axis;
ii. **the noise level of the most persistent noise,** that is the noise level of the highest column P in the Figure 4 histogram. Again this is likely to be that of the leak, i.e. the most common noise of the leak;
iii. **the recurrence of the most persistent noise,** expressed as the number of samples having this loudness as a percentage of the total number of samples, that is the height of the highest column P;
iv. **the lower sample concentration,** i.e. the difference in dB between the quietest noise and the most persistent noise, i.e the difference between the parameters i. & ii. This gives a measure of the steepness of the rise of the histogram to the most persistent noise;
**v. the comparison of the recurrence of the most persistent noise with the occurrence of noise levels below the most persistent noise,** i.e. comparison of the area of the highest column P with the area of the columns which are quieter than the column P. The comparison is made with the column width normalised to 1dB width. This is a measure of the skewness of the histogram. The parameter is LOW when the area of the quieter columns is less than that of the highest column. It is then indicative of other noise adding to leak noise.

The parameters i.-v. are logged. A ranked indication of the quietest sampled noise is prepared as follows:

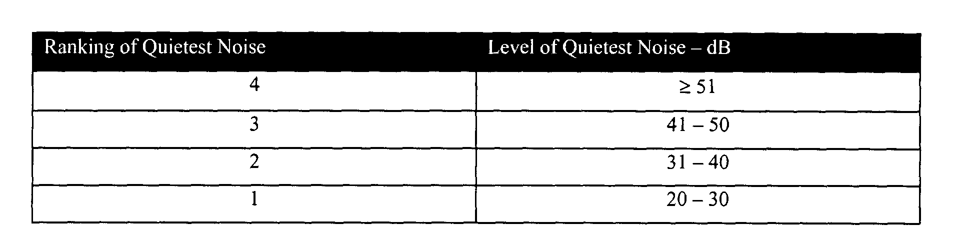

A ranked indication of the most persistent sampled noise is prepared as follows:

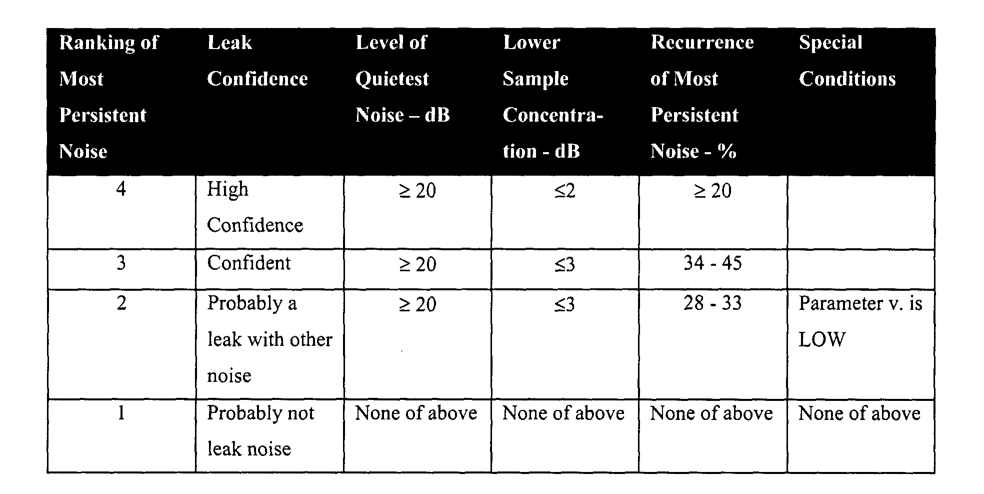

The rankings are logged. When the logger is interrogated, the first set of LEDs displays the ranking of the quietest noise and the second set shows the ranking of the most persistent noise in terms of the Leak Confidence of the above table.

The invention is not intended to be restricted to the details of the above described embodiment. For instance, only two data output LEDs may be used. Each, that is the quietest noise LED and the confidence LED, is programmed to flash repetitively with a fast count of its data ranking, e.g. 4 flashes for "High Confidence", followed by an interval and then a repetition of its fast count.

## Claims

1. A leak-noise data logger comprising:
• an acoustic transducer;
• means for sampling the output of the acoustic transducer;
• means for measuring the most persistent sampled noise in a monitoring period; and
• means for outputting a ranked indication of the most persistent sampled noise.

2. A leak-noise data logger as claimed in claim 1, further including:
• means for measuring the quietest sampled noise in the monitoring period and
• means for outputting a ranked indication of the quietest sampled noise.

3. A leak-noise data logger as claimed in claim 1 or claim 2, wherein the basis for ranking the quietest and the most persistent noise indications on the basis of measured values.

4. A leak-noise data logger as claimed in claim 1 or claim 2, wherein the basis for ranking the most persistent noise indications is on the basis of one or more of the following statistical considerations:
• the "lower sample concentration" of the noise samples, by which is meant the dB extent of the samples, from the quietest noise to the most persistent noise;
• the steepness of a graph of distribution of noise samples;
• the skewing of the graph of distribution of noise samples
• the area under a graph of distribution of noise samples between the quietest noise and the most persistent noise.

5. A leak-noise data logger as claimed in claim 1 or claim 2, wherein the ranking of the quietest noise is into discrete noise level bands.

6. A leak-noise data logger as claimed in claim 5, wherein the noise level bands are of the order of 10 dB wide.

7. A leak-noise data logger as claimed in claim 1 or claim 2, wherein the ranking of the most persistent noise is based on its recurrence.

8. A leak-noise data logger as claimed in claim 7, wherein a leak indication is given only if the lower sample concentration of noise from the quietest to the most persistent is less than a certain dB level and only if the quietest noise has a greater than a predetermined noise level.

9. A leak-noise data logger as claimed in claim 8, wherein the dB level of the lower sample concentration is 3dB.

10. A leak-noise data logger as claimed in claim 8 or claim 9, wherein the predetermined noise level for the quietest noise is 20dB

11. A leak-noise data logger as claimed in any preceding claim, wherein the leak indications are ranked as in terms of leak presence confidence, including:
• High Confidence
• Confidence
• Probable
• Improbable.

12. A leak-noise data logger as claimed in any preceding claim, wherein the output means is a number of LEDs, arranged to indicate the rankings.

13. A leak-noise data logger as claimed in claim 12, wherein the LEDs arranged to be illuminated only when the data logger is interrogated.

14. A leak-noise data logger as claimed in any one of claims 1 to 12, wherein the outputs means is radio or acoustic data transmission.

15. A leak-noise data logger substantially as hereinbefore described with reference to Figures 1 to 4 of the accompanying drawings.
